# EUROPÄISCHE PATENTANMELDUNG

(11) **EP 3 254 642 A1**
(43) Veröffentlichungstag der Anmeldung: **13.12.2017**
(21) Anmeldenummer: 16173547.7
(22) Anmeldetag: 08.06.2016
(51) Int. Cl.: A61C 3/06, B25H 3/00

(54) **HALTEEINRICHTUNG FÜR DENTALE POLIERSCHEIBEN**

(71) Anmelder: Schöler, Arno, 2502 Biel/Bienne (CH)
(72) Erfinder: Schöler, Arno, 2502 Biel/Bienne (CH)
(74) Vertreter: BOVARD AG

(57) **Zusammenfassung**

Eine Halteeinrichtung (1), in welcher dentale Polierscheiben (2) untergebracht werden können, ist aus einer Grundplatte (3) und einer oberen Platte (4) gebildet, welche beiden Platten (3, 4) übereinanderliegend miteinander verbunden sind. Die beiden Platten (3 und 4) haben einen gegenseitigen Abstand voneinander, der mindestens der Dicke der in die Halteeinrichtung (1) einsetzbaren Polierscheiben (2) entspricht. Mindestens ein Seitenrand (7) der oberen Platte (4) ist mit Einbuchtungen (9) versehen, in welche der jeweilige Schaft (14) der in die Halteeinrichtung (1) eingesetzten Polierscheiben (2) zu liegen kommt. Mit einer derartigen Halteeinrichtung (1) können die Polierscheiben (2) in geordneter und separierter Weise dem Gebrauch zugeführt werden.

## Beschreibung

Die vorliegende Erfindung bezieht sich auf eine Halteeinrichtung für dentale Polierscheiben, welche Polierscheiben im Zentrum mit einem einseitig über die Scheibe vorstehenden Schaft ausgestattet sind und die Scheibe mindestens einseitig mit einer Körnung versehen ist.

Zur Obenflächen- und Politurbehandlung von Zähnen werden Scheiben eingesetzt, die mit einem im Zentrum und einseitig über die Scheibe vorstehenden Schaft ausgestattet sind. Im Schaft ist eine Öffnung angebracht, mittels welcher die sogenannte Polierscheibe auf ein rotierbares Mandrell eines Bohrinstrumentes aufgesteckt werden können. Die entsprechenden Scheiben können verschiedene Dicken aufweisen, sie können an der Oberseite und / oder an der Unterseite mit einer Körnung ausgestattet sein, die je nach Einsatzart fein oder gröber sein kann. Zahnärzte beziehen diese Polierscheiben üblicherweise bei einem Hersteller, diese Polierscheiben werden dann verpackt in Säcklein oder kleinen Schachteln geordnet oder ungeordnet angeliefert. Vielfach sind die Polierscheiben der gleichen Grösse, Scheibendicke und Körnung in jeweils einem Säcklein oder einer kleinen Schachtel untergebracht, wobei jeder Polierscheibentyp mit einer speziellen Farbe zur schnellen Erkennung gekennzeichnet ist.

Wenn derartige Polierscheiben eingesetzt werden sollen, müssen diese aus dem jeweiligen Säcklein oder der kleinen Schachtel entnommen und auf das Mandrell des Bohrinstrumentes aufgesetzt werden. Die Polierscheibe weist hierzu einen Schaft auf, der aus einem elastischen Material gebildet ist, sodass das Aufsetzen des Schaftes dieser Polierscheibe auf dem Mandrell des Bohrinstrumentes sehr einfach erfolgen kann und die Polierscheibe in optimaler Weise auf dem Mandrell gehalten wird. Um diese Halterung zu verbessern, können in bekannter Weise noch Klickeinrichtungen eingesetzt werden.

Während eines Behandlungsvorgangs eines Zahnes ist es oftmals nötig, dass verschiedene Polierscheiben eingesetzt werden müssen. Der jeweilige Wechsel einer Polierscheibe im Bohrinstrument von Hand ist für einen Zahnarzt nicht zufriedenstellend gelöst.

Die Aufgabe der Erfindung besteht somit darin, eine Einrichtung zu schaffen, mit welcher das Einsetzen von Polierscheiben in das jeweilige Bohrinstrument und das Herausnehmen dieser Polierscheiben aus dem Bohrinstrument vereinfacht wird, gleichzeitig soll erreicht werden, dass die Polierscheiben dem Zahnarzt in geordneter Weise zur Verfügung gestellt werden.

Erfindungsgemäss erfolgt die Lösung dieser Aufgabe dadurch, dass die Halteeinrichtung aus einer Grundplatte und einer oberen Platte gebildet ist, welche beiden Platten übereinanderliegend miteinander verbunden sind, so dass die beiden Platten einen gegenseitigen Abstand voneinander haben, der mindestens der Dicke der in die Halteeinrichtung einsetzbaren Polierscheiben entspricht, dass mindestens ein Seitenrand der oberen Platte mit Einbuchtungen versehen ist, in welche der jeweilige Schaft der in die Halteeinrichtung eingesetzten Polierscheibe zu liegen kommt.

Derartige Halteeinrichtungen sollen zum Verpacken und Versenden von Polierscheiben eingesetzt werden, hierzu werden in die Einbuchtungen dieser Halteeinrichtungen die entsprechende Anzahl Polierscheiben eingesetzt, diese mit Polierscheibe bestückte Halterung kann dann vom Zahnarzt direkt vor Ort platziert werden, die geordnet in der Halterung untergebrachten Polierscheiben können dann zum Gebrauch in einfacher Weise mit dem Bohrinstrument aufgenommen und aus der Halterung herausgezogen werden. Derartige Halterungen können aber auch dazu verwendet werden, dass zur Vorbereitung der Behandlung eines Patienten eine Halterung mit unterschiedlichen Polierscheiben bestückt wird, je nach Bearbeitungsvorgang bzw. Bearbeitungschritt kann durch dem Zahnarzt mit dem Bohrinstrument die gewünschte Polierscheibe aus der Halteeinrichtung entnommen werden. Durch die unterschiedliche Farbgebungen der Polierscheiben hinsichtlich Körnungsfeinheit, Dicke der Scheibe, wodurch die elastische Verbiegung der Scheibe festgelegt wird, und welche Oberflächen der Scheibe beschichtet sind, kann der Zahnarzt in einfacher Weise die gewünschte Polierscheibe zur Durchführung des entsprechenden Bearbeitungsvorgangs auswählen und entnehmen.

In vorteilhafter Weise ist die obere Platte und die mit dieser verbundenen Grundplatte durch ein Umbiegen einer Basisplatte erhaltbar und entsteht dadurch eine erste Biegekante. Dies ermöglicht eine einfache und kostengünstige Herstellung der Halteeinrichtung.

In vorteilhafter Weise sind die Einbuchtungen der oberen Platte an der der ersten Biegekante gegenüberliegenden Längsseite angebracht, die Halteeinrichtung kann dadurch sehr schmal und platzsparend ausgebildet werden.

In vorteilhafter Weise ist die Längsseite der oberen Platte bezüglich der Längsseite der Grundplatte gegen die erste Biegekante hin zurückversetzt, dadurch können die Polierscheiben in einfacher Weise in die Halteeinrichtung eingesetzt werden, die Scheibe wird hierzu auf die Grundplatte aufgesetzt und kann dann durch die Grundplatte geführt in den durch die beiden Platten gebildeten Schlitz und in die entsprechende Einbuchtung eingeschoben werden. Zudem ist durch diese Ausgestaltung der Halteeinrichtung die Vorderseite der Polierscheibe in optimale Weise geschützt.

Die Halteeinrichtung kann auch so ausgestaltet werden, dass an der Grundplatte auf der der oberen Seite gegenüberliegenden Seite eine untere Platte angebracht ist, und dass mindestens ein Seitenrand der unteren Platte mit Einbuchtungen versehen ist, in welche der jeweilige Schaft der in die Halteeinrichtung eingesetzten Polierscheibe zu liegen kommt. Dadurch kann die Kapazität der Halteeinrichtung zur Aufnahme von Polierscheiben beispielsweise verdoppelt werden.

In vorteilhafter Weise ist auch hier die obere Platte, die untere Platte und die mit diesen verbundenen Grundplatte durch ein Umbiegen einer Basisplatte erhaltbar und entsteht eine erste Biegekante und eine zweite Biegekante. Auch die so gestaltete Halteeinrichtung kann dadurch in sehr einfacher Weise und kostengünstig hergestellt werden.

Die Einbuchtungen der unteren Platte sind auch hier an der der zweiten Biegekante gegenüberliegenden Längsseite angebracht und ist die Längsseite der unteren Platte bezüglich der ersten Biegekante der Grundplatte gegen die zweite Biegekante hin zurückversetzt, wodurch auch hier die oben genannten Vorteile erreichbar sind.

Die Halteeinrichtung kann beispielsweise aus einem thermoplastischen Kunststoff hergestellt werden, insbesondere PET. Einerseits wird der Herstellvorgang sehr einfach, eine aus PET bestehende Halteeinrichtung kann beispielsweise als Einweghalteeinrichtung eingesetzt werden, insbesondere weil das Material recyclierbar ist und weil das Material kostengünstig ist.

Die Halteeinrichtung kann auch aus einem nichtrostenden Stahl hergestellt werden, dies insbesondere dann, wenn diese Halteeinrichtung dazu verwendet wird, diese jeweils mit den erforderlichen Polierscheiben für die Behandlung eines Patienten zu bestücken, die Halteeinrichtung kann nach dem entsprechenden Einsatz in einfacher Weise gereinigt und in einem Autoklaven sterilisiert werden.

In vorteilhafter Weise sind die Einbuchtungen U-förmig ausgebildet und ist der offene Bereich der Einbuchtungen mit einer Verengung ausgestattet. Dadurch können die Polierscheiben in optimaler Weise in der Halteeinrichtung festgehalten werden. Da die Schäfte der Polierscheiben aus einem elastischen Material gebildet sind, kann durch die Verengung am offenen Bereich der Einbuchtungen zusätzlich ein Klickeffekt erhalten werden, wodurch die Polierscheiben in der Halteeinrichtung in sicherer Weise festgehalten werden.

Ausführungsformen der Erfindung werden nachfolgend an Hand der beiliegenden Zeichnung beispielhaft näher erläutert.

Es zeigt
Figur 1 in räumlicher Darstellung eine erfindungsgemässe Halteeinrichtung in einfacher Form, bestückt mit einer Anzahl von Polierscheiben;
Figur 2 in räumlicher Darstellung eine Polierscheibe;
Figur 3 eine Seitenansicht auf die Halteeinrichtung gemäss Figur 1;
Figur 4 in räumlicher Darstellung mit einer Ansicht von vorne eine erfindungsgemässe Halteeinrichtung mit doppelter Aufnahmekapazität, bestückt mit Polierscheiben;
Figur 5 in räumlicher Darstellung eine Ansicht von hinten auf die Halteeinrichtung gemäss Figur 4; und
Figur 6 eine Seitenansicht der erfindungsgemässen Halteeinrichtung gemäss den Figuren 4 und 5.

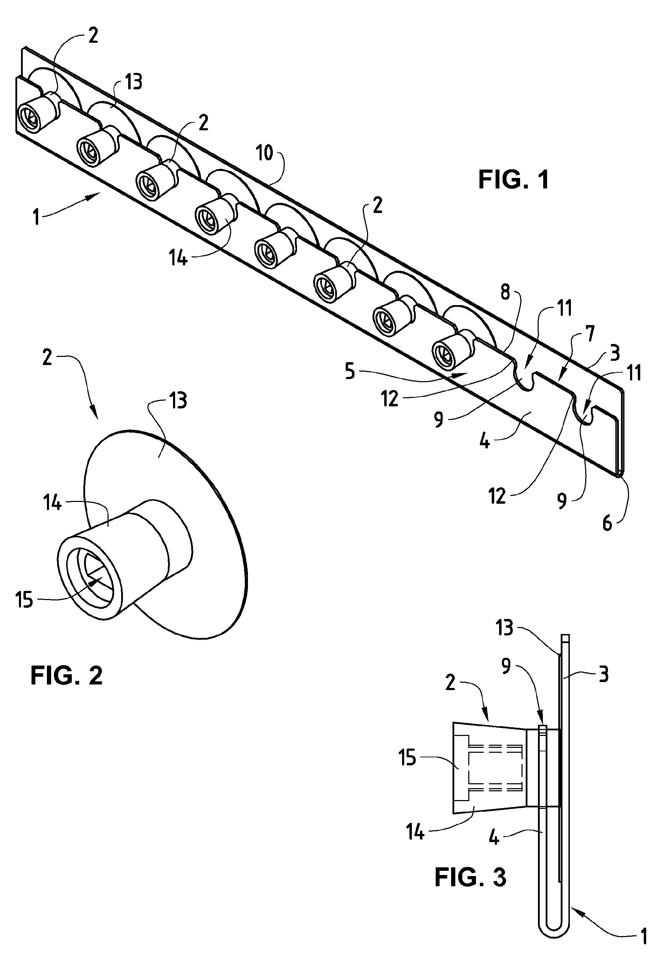

Aus Figur 1 ist eine erfindungsgemäss Halteeinrichtung 1 ersichtlich, in welche die dentalen Polierscheiben 2 eingesetzt sind. Diese Halteeinrichtung 1 ist aus einer Grundplatte 3 und einer oberen Platte 4 gebildet. Diese Grundplatte 3 und die obere Platte 4 sind aus einer Basisplatte 5 gebildet worden, welche längs einer ersten Biegekante 6 umgebogen ist, so dass die Grundplatte 3 und die obere Platte 4 übereinanderliegend angeordnet sind und einen gegenseitigen Abstand voneinander haben. Damit die Polierscheiben 2 zwischen die Grundplatte 3 und die obere Platte 4 eingeschoben werden können, weisen diese beiden Platten 3 und 4 einen gegenseitigen Abstand voneinander auf, der mindestens der Dicke der Polierscheiben 2 entspricht. Der Seitenrand 7 der oberen Platte 4, der die der ersten Biegekante 6 gegenüberliegenden Längsseite 8 bildet, ist mit Einbuchtungen 9 versehen. Die Längsseite 8 mit den Einbuchtungen 9 der oberen Platte 5 ist bezüglich der Längsseite 10 der Grundplatte 3 gegen die erste Biegekante 6 hin zurückversetzt. Die Einbuchtungen 9, die in der oberen Platte 4 angebracht sind, sind U-förmig ausgebildet, der offene Bereich 11 der Einbuchtungen 9 ist mit einer Verengung 12 ausgestattet.

Die Polierscheibe 2, wie sie in Figur 2 dargestellt ist, umfasst eine kreisförmige Scheibe 13, in deren Zentrum ein einseitig über die Scheibe 13 vorstehender Schaft 14 angebracht ist. Derartige Polierscheiben sind im Fachhandel in vielfältiger Ausführung erhaltbar. Die Scheibe 13 ist an der Oberseite oder an der Unterseite oder an beiden Seiten in bekannter Weise mit einer Körnung ausgestattet, die verschiedenste Feinheiten aufweisen können, je nach Einsatz der entsprechenden Polierscheibe. Der Schaft 14 ist mit einer Aufnahmeöffnung 15 versehen, in welche das Mandrell eines Bohrinstrumentes eingesetzt werden kann. Der Schaft 14 dieser bekannten Polierscheiben 2 ist üblicherweise aus einem elastischen Material gebildet.

Diese Polierscheiben 2 können in die Halteeinrichtung 1, wie in Figur 1 dargestellt ist, eingesetzt werden. Hierzu werden die Polierscheiben 2 mit der Unterseite der Scheibe 13 teilweise auf die Grundplatte 3 aufgelegt und können dann entlang dieser Grundplatte 3 in die entsprechende Einbuchtung 9 eingeschoben werden. Durch den elastischen Schaft 14 und die Verengung 12 am offenen Bereich 11 der Einbuchtungen 9 werden die Polierscheiben 2 in optimaler Weise in der Halteeinrichtung 1 gehalten. Es ist auch denkbar, dass die Einbuchtungen 9 ohne Verengung 12 ausgebildet sein können. An deren Stelle kann beispielsweise an der oberen Platte 4 ein gegen die Grundplatte 3 gerichteter Vorsprung angebracht werden, der beispielsweise rippenförmig ausgebildet ist und sich über die Länge der oberen Platte 4 erstreckt. Die in die Halteeinrichtung 1 eingesetzten Polierscheiben 2 können somit durch Klemmung zwischen dem Vorsprung der oberen Platte 4 und der Grundplatte 3 gehalten werden. Selbstverständlich könnte der Vorsprung auch an der Grundplatte 3 oder an beiden Platten 3 und 4 angebracht sein.

Figur 3 zeigt eine Polierscheibe 2, die in die Halteeinrichtung 1 eingesetzt ist, der Schaft 14 der Polierscheibe 2 wird in der Einbuchtung 9 der Halteeinrichtung gehalten, die Scheibe 13 liegt auf der Grundplatte 3 der Halteeinrichtung 1 auf, wird somit durch die Grundplatte 3 vollständig überdeckt und ist dadurch in optimaler Weise geschützt.

Die neu gefertigten Polierscheiben 2 können zum Verkauf und Versand in eine derartige Halteeinrichtung 1 eingesetzt werden, beispielsweise in einer Stückzahl von 10. Die Polierscheiben 2 können so in einfacher Weise aus dieser Halteeinrichtung 1 entnommen werden, beispielsweise kann der Zahnarzt direkt das Mandrell eines Bohrinstrumentes in die Aufnahmeöffnung 15 einstecken und die Polierscheibe aus der Halteeinrichtung 1 herausfahren. Diese Halteeinrichtung kann für den Einweggebrauch verwendet werden, in diesem Fall kam das Material beispielsweise PET sein, das leicht recyclierbar ist, diese Halteeinrichtung 1 kann aber auch aus beispielsweise Chromstahl hergestellt werden, eine derartige Halteeinrichtung kann dazu dienen, dass vor einer Behandlung eines Patienten eine derartige Halteeinrichtung 1 mit einer Anzahl von Polierscheiben 2 bestückt werden kann, wobei diese Polierscheiben verschiedene Charakteristiken aufweisen, je nach dem, für welche Behandlungsart sie eingesetzt werden sollen. Eine derartige Halteeinrichtung 1 aus Chromstahl kann nach dem Gebrauch und vor dem nächsten Einsatz gereinigt und in einem Autoklaven sterilisiert werden.

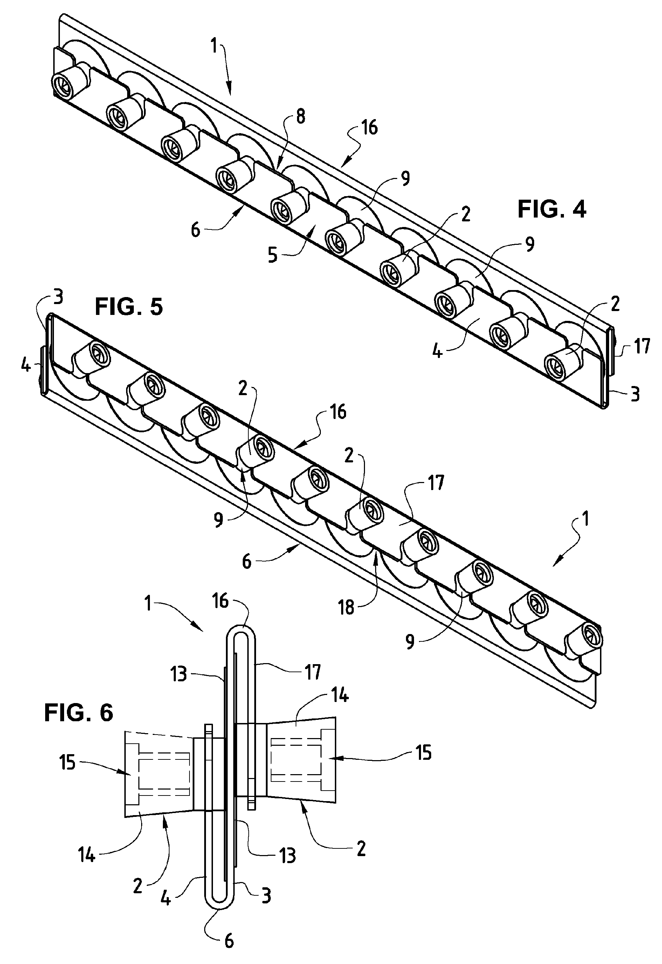

Die Figuren 4 und 5 zeigen eine weitere Ausführungsform einer erfindungsgemässen Halteeinrichtung 1 für dentale Polierscheiben 2. Diese Halteeinrichtung 1 wird wiederum durch ein Umbiegen einer Basisplatte 5 erhalten, um eine erste Biegekante 6 wird die obere Platte 4 umgebogen, um eine zweite Biegekante 16 wird eine untere Platte 17 umgebogen. Die Längsseite 8 der oberen Platte 4 und die Längsseite 18 der unteren Platte 17 sind bezüglich der Grundplatte 3 wiederum zurückversetzt und mit den bereits vorgängig beschriebenen Einbuchtungen 9 ausgestattet. In die Einbuchtungen 9 der oberen Platte 4 und der unteren Platte 17 sind, wie vorgängig beschrieben worden ist, die Polierscheiben 2 einsetzbar und werden durch die Halteeinrichtung 1 gehalten.

Aus Figur 6 ist ersichtlich, wie die Polierscheiben 2 in der Halteeinrichtung 1 eingesetzt und gehalten sind, mit dieser Ausgestaltung der Halteeinrichtung 1 können die Polierscheiben 2 in zwei einander gegenüberliegenden Reihen untergebracht werden. Die Scheiben 13 der Polierscheiben 2 liegen von beiden Seiten auf der Grundplatte 3 auf, die Schäfte 14 der Polierscheiben 2 werden durch die Einbuchtungen 9 gehalten.

Diese zweite Ausführungsform einer erfindungsgemässen Halteeinrichtung, wie sie zu den Figuren 4 bis 6 beschrieben worden ist, wird in gleicher Weise eingesetzt, wie die vorgängig beschriebene Halteeinrichtung, wie sie in den Figuren 1 bis 3 dargestellt ist. In dieser zweiten Ausführungsform einer Halteeinrichtung 1 kann die doppelte Anzahl von Polierscheiben 2 untergebracht werden.

Die vorgängig beschriebenen Halteeinrichtungen 1 für dentale Polierscheiben 2 können zum Beispiel in bekannter Weise auf einem Träger fixiert werden, welcher beispielsweise auf einem Tablet im Behandlungsbereich eines Zahnarztes angeordnet werden kann. Dadurch kann der Zahnarzt die Polierscheiben 2 direkt mit dem Bohrinstrument aus der Halteeinrichtung 1 entnehmen und gegebenenfalls wiedereinsetzen, ohne dass die Halteeinrichtung 1 zusätzlich festgehalten werden muss, was eine einfache Handhabung für den Zahnarzt ermöglicht.

Mit einer derartigen erfindungsgemässen Halteeinrichtung können die dentalen Polierscheiben in geordneter und separierter Form angeliefert und aufbewahrt werden, eine derartige Halteeinrichtung kann ohne weiteres auch mit unterschiedlichen Polierscheiben bestückt werden, sodass ein Behandlungsablauf für einen Zahnarzt in optimaler Weise ermöglicht wird.

## Patentansprüche

1. Halteeinrichtung (1) für dentale Polierscheiben (2), welche Polierscheiben (2) im Zentrum mit einem einseitig über die Scheibe (13) vorstehenden Schaft (14) ausgestattet sind und die Scheibe (13) mindestens einseitig mit einer Körnung versehen ist, **dadurch gekennzeichnet, dass** die Halteeinrichtung (1) aus einer Grundplatte (3) und einer oberen Platte (4) gebildet ist, welche beiden Platten (3, 4) übereinanderliegend miteinander verbunden sind, so dass die beiden Platten (3, 4) einen gegenseitigen Abstand voneinander haben, der mindestens der Dicke der in die Halteeinrichtung (1) einsetzbaren Polierscheiben (2) entspricht, dass mindestens ein Seitenrand (7) der oberen Platte (4) mit Einbuchtungen (9) versehen ist, in welche der jeweilige Schaft (14) der in die Halteeinrichtung (1) eingesetzten Polierscheibe (2) zu liegen kommt.

2. Halteeinrichtung (1) für dentale Polierscheiben (2) nach Anspruch 1, **dadurch gekennzeichnet, dass** die obere Platte (4) und die mit dieser verbundenen Grundplatte (3) durch ein Umbiegen einer Basisplatte (5) erhaltbar ist und eine erste Biegekante (6) entsteht.

3. Halteeinrichtung (1) für dentale Polierscheiben (2) nach Anspruch 2, **dadurch gekennzeichnet, dass** die Einbuchtungen (9) der oberen Platte (4) an der der ersten Biegekante (6) gegenüberliegenden Längsseite (8) angebracht sind.

4. Halteeinrichtung (1) für dentale Polierscheiben (2) nach Anspruch 3, **dadurch gekennzeichnet, dass** die Längsseite (8) der oberen Platte (4) bezüglich der Längsseite (10) der Grundplatte (3) gegen die erste Biegekante (6) hin zurückversetzt ist.

5. Halteeinrichtung (1) für dentale Polierscheiben (2) nach einem der Ansprüche 1 bis 4, **dadurch gekennzeichnet, dass** an der Grundplatte (3) auf der der oberen Seite gegenüberliegenden Seite eine untere Platte (17) angebracht ist, und dass mindestens ein Seitenrand der unteren Platte (17) mit Einbuchtungen (9) versehen ist, in welche der jeweilige Schaft (14) der in die Halteeinrichtung (1) eingesetzten Polierscheibe (2) zu liegen kommt.

6. Halteeinrichtung (1) für dentale Polierscheiben (2) nach Anspruch 5, **dadurch gekennzeichnet, dass** die obere Platte (4), die untere Platte (17) und die mit diesen verbundenen Grundplatte (3) durch ein Umbiegen einer Basisplatte (5) erhaltbar ist und eine erste Biegekante (6) und eine zweite Biegekante (16) entsteht.

7. Halteeinrichtung (1) für dentale Polierscheiben (2) nach Anspruch 6, **dadurch gekennzeichnet, dass** die Einbuchtungen (9) der unteren Platte (17) an der der zweiten Biegekante (16) gegenüberliegenden Längsseite (18) angebracht sind.

8. Halteeinrichtung (1) für dentale Polierscheiben (2) nach Anspruch 7, **dadurch gekennzeichnet, dass** die Längsseite (18) der unteren Platte (17) bezüglich der ersten Biegekante (6) der Grundplatte (3) gegen die zweite Biegekante (16) hin zurückversetzt ist.

9. Halteeinrichtung (1) für dentale Polierscheiben (2) nach einem der Ansprüche 1 bis 8, **dadurch gekennzeichnet, dass** diese aus einem thermoplastischen Kunststoff, insbesondere PET, besteht.

10. Halteeinrichtung (1) für dentale Polierscheiben (2) nach einem der Ansprüche 1 bis 8, **dadurch gekennzeichnet, dass** diese aus einem nichtrostenden Stahl besteht.

11. Halteeinrichtung (1) für dentale Polierscheiben (2) nach einem der Ansprüche 1 bis 10, **dadurch gekennzeichnet, dass** die Einbuchtungen (9) U-förmig ausgebildet sind und dass der offene Bereich (11) der Einbuchtungen (9) mit einer Verengung (12) ausgestattet ist.
